# EUROPEAN PATENT SPECIFICATION

(11) **EP 4 375 154 B1**
(45) Date of publication and mention of the grant of the patent: **18.03.2026**
(21) Application number: 22209167.0
(22) Date of filing: 23.11.2022
(51) Int. Cl.: B60W 30/18, B60T 13/58

(54) **CONTROLLING ACCELERATION OF A VEHICLE USING AUXILIARY BRAKES**
STEUERUNG DER BESCHLEUNIGUNG EINES FAHRZEUGS MIT HILFSBREMSEN
COMMANDE DE L'ACCÉLÉRATION D'UN VÉHICULE À L'AIDE DE FREINS AUXILIAIRES

(43) Date of publication of application: 29.05.2024
(73) Proprietor: VOLVO TRUCK CORPORATION, 405 08 Göteborg (SE)
(72) Inventor: Bora, Teodoro, 412 62 Göteborg (SE); Lägnert, Viktor, 413 27 Göteborg (SE); Öberg, Niklas, 423 51 Torslanda (SE)
(74) Representative: Valea AB

(56) References cited:
- EP-A1- 3 260 336
- EP-A1- 3 725 581
- WO-A2-2011/062697
- DE-A1- 10 135 192
- US-A1- 2008 172 162

## Description

### TECHNICAL FIELD

The disclosure relates generally to vehicle motion control. In particular aspects, the disclosure relates to controlling an acceleration of a vehicle. The disclosure can be applied in heavy-duty vehicles, such as trucks, buses, and construction equipment. Although the disclosure may be described with respect to a particular vehicle, the disclosure is not restricted to any particular vehicle.

### BACKGROUND

Controlling motion in a vehicle can be performed in many different manners such as manual control, cruise control, retarding the vehicle, etc.

When controlling a vehicle travelling downhill, in particular a heavy-duty vehicle, it is common for a driver to control the vehicle's motion by controlling auxiliary brakes to retard the vehicle. The auxiliary brakes may further be used to regenerate electricity for a battery of the vehicle. Typically, such a control of auxiliary brakes is controlled by a stalk next to the steering wheel. The stalk has multiple discrete position. Each position is typically mapped to a different ratio of torque to be transformed into electrical energy by the auxiliary brakes. Examples of vehicle's motion control by controlling auxiliary brakes are known from EP 3 260 336 A1, DE 10135 192 A1 and US 2008/172162 A1.

Despite of being widely used, such an approach has some drawbacks, some of them which will be explained below.

Drawback 1. There are situations where the driver knows well a right gear and/or speed for a particular downhill stretch, but an optimal amount of torque lies in between the different predefined configurations.

Drawback 2. The configurations does not consider the resistive forces such as inclination, rolling resistance, air drag, driveline and/or tire configurations. This results in poor comfort and vehicle control i.e. an irregular motion of the vehicle. This drawback may in particular arise when a ratio of torque of a vehicle is either excessively greater or excessively lower than a resistive force as given by a payload and/or inclination of the vehicle.

Drawback 3. Drivers can easily forget to switch configurations or use a wrong configuration. As a ratio of torque will then always be converted, this may jeopardize fuel consumption and ability to control the vehicle optimally.

Therefore, there is an ongoing strive to improve control a motion of vehicles, in particular for improving control of a motion of vehicles travelling downhill.

### SUMMARY

The present invention is defined by the features of independent claims 1, 2, 11 and 12.

According to a first aspect of the disclosure, a computer system comprising a processor device configured to control an acceleration of a vehicle is provided. The vehicle comprises a set of auxiliary brakes, comprising at least one auxiliary brake, for retarding said vehicle. The processor device is further configured to obtain an acceleration condition of the vehicle, the acceleration condition being indicative of any one out of: an acceleration of the vehicle, the absolute value of which is below a predetermined acceleration limit value, a predefined positive acceleration of the vehicle, and a predefined negative acceleration of the vehicle. The processor device is further configured to obtain drive condition information of the vehicle and on the basis of said drive condition information, determine whether or not the vehicle can be controlled in accordance with the obtained acceleration condition using said set of auxiliary brakes. The processor device is further configured to, in response to determining that the vehicle can be controlled in accordance with said obtained acceleration condition using said set of auxiliary brakes, control said set of auxiliary brakes in accordance with said obtained acceleration condition of the vehicle.

The first aspect of the disclosure may seek to solve the problem of controlling a motion of the vehicle driving downhill. A technical benefit may include an improved motion control of the vehicle. This is since the first aspect controls said set of auxiliary brakes in accordance with said obtained acceleration condition of the vehicle. This allows the vehicle to travel at a set acceleration instead of using a predefined ratio of torque. Using a set acceleration allows the vehicle to efficiently adapt to forces subject to the vehicle such as differing inclination of a roll, rolling resistance, air drag, driveline and/or tire configurations.

Furthermore, this allows for an efficient user-friendly mechanism to hold, lower, or increase the vehicle speed. It also allows for an efficient user-friendly mechanism to adjust the acceleration of the vehicle. For example, e.g., when the acceleration condition is indicative of the acceleration of the vehicle, the acceleration of the vehicle can be increased by changing the acceleration condition to be indicative of the predefined positive acceleration of the vehicle. In a corresponding manner, the acceleration of the vehicle can be decreased by changing the acceleration condition to be indicative of the predefined negative acceleration of the vehicle. Thus, a driver of the vehicle can easily change up and down until a suitable acceleration level is achieved, independently on what auxiliary brake control is needed.

Moreover, the vehicle can be adapted to any suitable speed for any part of a road segment. For example, a driver may know a best acceleration and/or speed to use for a specific segment and can use the different acceleration conditions accordingly.

Also, since it is determined that the vehicle can be controlled in accordance with said obtained acceleration condition using said set of auxiliary brakes, the acceleration condition will only be applied when it is valid, e.g., when an accelerator pedal of the vehicle has been released.

According to a second aspect of the disclosure, a computer-implemented method for controlling an acceleration of a vehicle is provided. The vehicle comprises a set of auxiliary brakes, comprising at least one auxiliary brake, for retarding said vehicle. The method further comprises, by a processor device of a computer system, obtaining an acceleration condition of the vehicle, the acceleration condition being indicative of any one out of: an acceleration of the vehicle, the absolute value of which is below a predetermined acceleration limit value; a predefined positive acceleration of the vehicle, and a predefined negative acceleration of the vehicle. By the processor device, obtaining drive condition information of the vehicle and on the basis of said drive condition information, determining whether or not the vehicle can be controlled in accordance with the obtained acceleration condition using said set of auxiliary brakes. The method further comprises, by the processor device, in response to determining that the vehicle can be controlled in accordance with said obtained acceleration condition using said set of auxiliary brakes, controlling said set of auxiliary brakes in accordance with said obtained acceleration condition of the vehicle.

The second aspect of the disclosure, in a corresponding manner, solves the same problem as the first aspect with a corresponding technical effect.

In some examples, the vehicle as comprises a service brake system, and said feature of determining whether or not the vehicle can be controlled in accordance with the obtained acceleration condition using said set of auxiliary brakes may comprise determining whether or not the vehicle can be controlled in accordance with the obtained acceleration condition using said set of auxiliary brakes when the service brake system is disengaged. Disengaged as used herein may mean that a brake pedal is released and/or a sensor measurement indicates that the service brake system applies a brake force less than a threshold, e.g. no brake force applied. A technical benefit may include an improved motion control of the vehicle. This is since the acceleration of the vehicle is easier to keep when operating without other brake forces to consider. Furthermore, this allows for the driver of the vehicle to brake the vehicle at own preference whenever necessary, and then continue with the set acceleration condition.

In some examples, the absolute value of the predefined positive acceleration is larger than the predetermined acceleration limit value, and the absolute value of the predefined negative acceleration is larger than the predetermined acceleration limit value.

In some examples, controlling said set of auxiliary brakes in accordance with said obtained acceleration condition of the vehicle is performed by employing a control procedure comprises, by the processor device, obtaining a current acceleration of the vehicle. when the current acceleration exceeds the acceleration indicated by the acceleration condition, applying an increased braking load on at least one of the set of auxiliary brakes, but when the current acceleration is less than the acceleration indicated by the acceleration condition, applying a decreased braking load on at least one of the set of auxiliary brakes. A technical benefit may include an improved motion control of the vehicle. This is since the dynamic increase and decrease of the acceleration based on the comparison with the acceleration condition allows for the acceleration to be kept even if forces applied to the vehicle changes, e.g., if drag or air resistance changes and/or if inclination of the road changes.

In some examples, the method comprises, by the processor device, receiving a signal indicative of current acceleration of said vehicle, and by the processor device, controlling said set of auxiliary brakes using a closed loop control that uses the signal indicative of current acceleration and the obtained acceleration condition. A technical benefit may include an improved motion control of the vehicle. This is since the closed loop allows for the acceleration to be kept even if forces applied to the vehicle changes, e.g., if drag or air resistance changes and/or if inclination of the road changes. This is since the closed loop is only based on the current acceleration and the obtained acceleration condition and the control of the auxiliary brakes is performed accordingly.

Said vehicle comprises a driveline adapted to propel said vehicle and wherein said control procedure comprises, by the processor device, estimating a first vehicle acceleration of the vehicle that can be obtained with a driveline of the vehicle being engaged, and by the processor device, estimating a second vehicle acceleration of the vehicle that can be obtained with at least a portion of the driveline of the vehicle being disengaged, and by the processor device, determining whether to engage the driveline of the vehicle or to disengage at least a portion of the driveline of the vehicle by comparing the first vehicle acceleration and the second vehicle acceleration with the acceleration indicated by the acceleration condition. A technical benefit may include an improved motion control of the vehicle. This is since when the vehicle drives downhill, disengaging the driveline may allow the vehicle to roll faster, i.e. increase its acceleration, since resistive forces caused by an engaged driveline are removed.

In some examples, determining whether to engage the driveline of the vehicle or to disengage at least a portion of the driveline of the vehicle comprises determining to engage the driveline of the vehicle when the driveline of the vehicle is disengaged and a difference between the first vehicle acceleration and the second vehicle acceleration is above a first threshold, and determining to disengage at least a portion of the driveline of the vehicle when the driveline of the vehicle is engaged and when the difference between the first vehicle acceleration and the second vehicle acceleration is above a second threshold. A technical benefit may include an improved motion control of the vehicle. This is since it is ensured that the driveline is engaged and/or disengaged according to the acceleration condition only when it is useful and avoids large swings in acceleration.

In some examples, determining whether or not the vehicle can be controlled in accordance with the obtained acceleration condition using said set of auxiliary brakes comprises detecting that there is an absence of a requested load of the engine of the vehicle. A technical benefit may include an improved motion control of the vehicle. This is since it should be possible to control the vehicle according to the requested load when there is a requested load of the engine without disturbance from the auxiliary brakes unless explicitly demanded from the driver of the vehicle. This also means that whenever the engine is requested a load, the acceleration condition will not affect the driving of the vehicle, and will not affect fuel consumption if the wrong acceleration condition would be set and forgotten while the driver continues driving the vehicle.

In some examples, detecting that there is an absence of a requested load of the engine of the vehicle comprises detecting that an accelerator pedal of the vehicle is in a released state. A technical benefit may include an improved motion control of the vehicle. This is since the controlling of the auxiliary brakes is always avoided when requesting acceleration by pressing the accelerator pedal. This allows the driver of the vehicle to both have acceleration controlled by the auxiliary brakes when needed/wanted, and to control the vehicle using the accelerator pedal when needing to adjust the speed or acceleration of the vehicle.

In some examples, the method further comprises, by the processor device, when the set of auxiliary brakes is controlled in accordance with the acceleration condition indicating the predefined negative acceleration of the vehicle, and in response to obtaining an indication to adjust the negative acceleration condition of the vehicle, adjusting the predefined negative acceleration of the vehicle with a predefined negative acceleration modifier. A technical benefit may include an improved motion control of the vehicle. For example, when the auxiliary brakes control the acceleration of the vehicle according to the predefined negative acceleration condition, there may be a need to reduce the acceleration further, but there may not be a need to use service brakes of the vehicle as these would retard the vehicle with too much power and wear down the service brakes. In these situations, a driver of the vehicle may instead adjust the predefined negative acceleration with the predefined negative acceleration modifier. The modification of acceleration by the predefined negative acceleration modifier may be reset whenever the acceleration condition is changed and/or based on any other suitable input.

According to a third aspect of the disclosure, a vehicle comprising a set of auxiliary brakes and a computer system according the first aspect is provided.

In some examples, the vehicle comprises a user interface for setting an acceleration condition, the user interface is adapted to assume at least three discrete positions, and wherein at least three positions are mapped to a respective acceleration condition.

In some examples, the user interface is a stalk, and wherein at least three discrete positions of the stalk indicates a respective acceleration condition. While embodiments herein will describe the user interface with respect to the acceleration conditions, some positions may also indicate other functionality, e.g., to disregard acceleration, to only use manual braking, to allow for service brake and auxiliary brake combinations, or any other suitable configuration.

In some examples, the set of auxiliary brakes comprises any one or more out of an engine brake, an electric regenerative brake, a hydraulic retarder, and a driveline retarder.

According to a fourth aspect of the disclosure, a computer program product is provided. The computer program product comprises program code for performing, when executed by the processor device, the method according to the second aspect.

According to a fifth aspect of the disclosure, a control system is provided. The control system comprises one or more control units configured to perform the method according to the second aspect.

According to a sixth aspect of the disclosure, a non-transitory computer-readable storage medium is provided. The non-transitory computer-readable storage medium comprises instructions, which when executed by the processor device, cause the processor device to perform the method according to the second aspect.

The third to sixth aspects of the disclosure, in a corresponding manner, solves the same problem as the first and second aspects with a corresponding technical effect.

The above aspects, accompanying claims, and/or examples disclosed herein above and later below may be suitably combined with each other as would be apparent to anyone of ordinary skill in the art.

Additional features and advantages are disclosed in the following description, claims, and drawings, and in part will be readily apparent therefrom to those skilled in the art or recognized by practicing the disclosure as described herein. There are also disclosed herein control units, computer readable media, and computer program products associated with the above discussed technical benefits.

### BRIEF DESCRIPTION OF THE DRAWINGS

With reference to the appended drawings, below follows a more detailed description of aspects of the disclosure cited as examples.
**FIG. 1** is an exemplary of a vehicle and a user interface according to one example.
**FIG. 2** is another view of **FIG. 1****,** according to another example.
**FIG. 3** is an example of a flowchart of a computer-implemented method according to one example.
**FIG. 4** is an example of a user interface according to one example.
**FIG. 5** is a schematic diagram of an exemplary computer system for implementing examples disclosed herein, according to one example.

### DETAILED DESCRIPTION

Aspects set forth below represent the necessary information to enable those skilled in the art to practice the disclosure.

When driving downhill, manually braking to control a vehicle or having configurations for a ratio of torque to be converted to electrical energy can be used to control a motion of a vehicle but is difficult to use to control the vehicle to a wanted or needed acceleration or speed. When using a configuration controlling a ratio of torque to be converted to electrical energy by the auxiliary brakes may for example have two different configurations wherein the wanted or needed acceleration or speed lies between the configurations causing a poor control of the vehicle motion. Furthermore, such configurations may be forgotten to turn off such that when a driver takes over to drive the vehicle, torque is still converted to electrical energy which thereby wastes fuel of the vehicle.

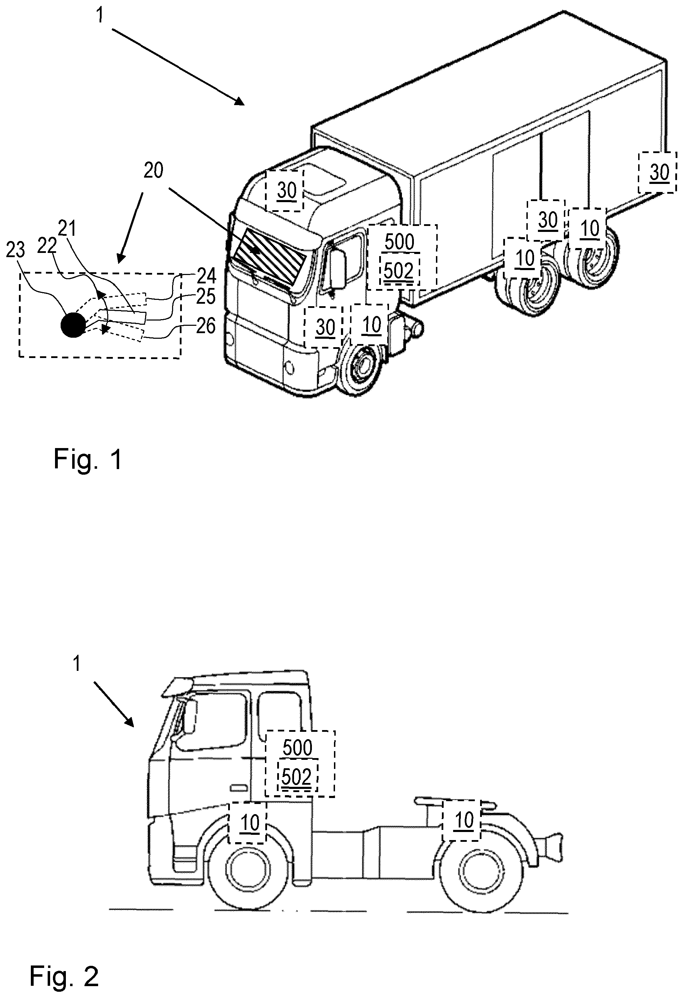

Embodiments herein relates to controlling an acceleration of a vehicle by controlling its auxiliary brakes. An example of embodiments is illustrated in **FIG. 1****.**

**FIG. 1****.** illustrates a **vehicle 1** comprising a **set of auxiliary brakes 10**. The
Embodiments herein are performed by setting a wanted acceleration condition and then controlling the set of auxiliary brakes 10 with respect to maintaining said acceleration condition. The acceleration condition may be indicative of an acceleration to, which, if possible, shall be maintained for the vehicle 1.

The acceleration condition may be indicative of an acceleration which absolute value is lower than a limit value, e.g., meaning that the acceleration is low or 0, causing the vehicle 1 to maintain its speed.

Alternatively, the acceleration condition may be indicative of a predefined negative acceleration, i.e. to reduce the acceleration by a predefined factor, e.g., reduce the acceleration by -0.25 meters per square second squared (m/s²).

Alternatively, the acceleration condition may be indicative of a predefined positive acceleration, i.e. to reduce the acceleration by a predefined factor, e.g., increase the acceleration by +0.25 m/s².

The acceleration condition may be set by a **user interface 20**. The user interface 20 may be comprised in the vehicle 10, e.g., for easy access to a driver of the vehicle 10, e.g., attached to or arranged adjacent to a steering wheel of the vehicle 1. If the vehicle 10 is remotely controlled, the user interface 20 may be part of a remote control device used for remotely controlling the vehicle 10.

The user interface 20 may be used for setting the acceleration condition.

The user interface 20 may be adapted to assume a finite number of discrete positions. The finite number is at least three.

As illustrated in FIG. 1, one possible implementation of the user interface 20 is that the user interface 20 comprises a **stalk 21.**

The stalk 21 may be switched to different discrete positions by switching a stalk position with respect to an **anchor point 23**, in **switching directions 22.**

For at least three positions, typically each discrete position, the stalk 21 may be mapped to a respective acceleration condition. In other words, for the user interface 20 there may be a **positive position 24** mapped to a predefined positive acceleration. The predefined positive acceleration may cause the set of auxiliary brakes 10 to be controlled such that the vehicle 1 is accelerated according to the predefined positive acceleration. The predefined positive acceleration may as an example be set to +0.25 m/s².

Additionally there may be a **maintaining position 25** mapped to an acceleration of which the absolute value is below a predetermined acceleration limit value. The acceleration absolute value being lower than the limit value, means that the acceleration is low, zero or close to zero acceleration. In other words, the maintaining position 25 may cause the set of auxiliary brakes 10 to be controlled to maintain the speed of the vehicle 1.

Additionally, there may be a **negative position 26** mapped to a predefined negative acceleration. The predefined negative acceleration may cause the set of auxiliary brakes 10 to be controlled such that the vehicle 1 is accelerated according to the predefined negative acceleration. The predefined negative acceleration may as an example be set to -0.25 m/s².

In the example of FIG. 1, the stalk 21 is set into the maintaining position 25, and can be switched to the negative position 26 or the positive position 24 by
When the user interface 20 is represented by another interface than a stalk, then the positions 24, 25, 26 as illustrated in FIG. 1. may instead be represented by one or more button presses, internal states, commands, configurations, or any other suitable manner to enter a different acceleration condition.

As an example, variations of the user interface 20 may include buttons on a dashboard of the vehicle 1, pedal presses on pedals of the vehicle 1, voice commands to a sound input device of the vehicle 1, remote commands from a device remotely controlling the vehicle 1, and/or any other suitable way of controlling the user interface 20.

The vehicle 1 may comprise a **set of sensors 30** to measure any suitable parameters necessary to perform the embodiments herein. For example, the set of sensors may comprise one or more speed and/or acceleration sensors to measure and/or derive a current speed and/or acceleration of the vehicle 1, e.g. by the use of a speedometer.

The vehicle 1 may comprise a driveline (not shown) . The driveline may controllable embodiments herein to be engaged and/or disengaged based on if increased or reduced acceleration is needed according to a current acceleration and the acceleration condition. When engaged, the driveline has a resistive force on the vehicle 1 causing the acceleration to be reduced. This means that the driveline induces a torque loss for the wheels of the vehicle 1. When disengaged, wheels of the vehicle 1 can roll freely and when driving downhill, the vehicle 1 can thus increase its acceleration quicker. The disengage and engage functionality may be automatic and can be referred to as an I-Roll functionality.

Embodiments herein may be performed at least partly by a **computer system 500,** and in particular a **processor device 502** therein. The computer system 500 may be comprised in the vehicle 1, or may be at a remote location communicatively coupled to the vehicle 1, e.g., in a server or control station which may be arranged to remotely control the vehicle 1. The computer system 500 and/or the processor device 502 therein may be able to obtain input from the user interface 20 and/or obtain sensor data from the set of sensors 30. The input may comprise the acceleration condition. The computer system 500 and/or the processor device 502 therein may thereby control the set of auxiliary brakes 10 in accordance with the acceleration condition. If needed to meet a certain acceleration condition, the computer system 500 and/or the processor device 502 therein may disengage and/or engage the driveline. The computer system 500 and/or the processor device 502 therein may further, directly or indirectly, control and/or communicate with any suitable entity comprised in the vehicle 1.

**FIG. 2** is another view of **FIG. 1****,** according to another example. FIG. 2. Illustrates the vehicle 1, the set of auxiliary brakes 10, and the computer system 500 comprising the processor device 502.

The processor device 502 is configured to control an acceleration of the vehicle 1. The vehicle 1 comprises a set of auxiliary brakes 10, comprising at least one auxiliary brake, for retarding said vehicle 1.

The processor device 502 is further configured to obtain an acceleration condition of the vehicle 1, the acceleration condition being indicative of any one out of: an acceleration of the vehicle 1, the absolute value of which is below a predetermined acceleration limit value; a predefined positive acceleration of the vehicle 1, and a predefined negative acceleration of the vehicle 1. In some examples, the absolute value of the predefined positive acceleration is larger than the predetermined acceleration limit value, and the absolute value of the predefined negative acceleration is larger than the predetermined acceleration limit value.

The processor device 502 is further configured to obtain drive condition information of the vehicle 1 and on the basis of said drive condition information, determine whether or not the vehicle 1 can be controlled in accordance with the obtained acceleration condition using said set of auxiliary brakes 10.

The processor device 502 is further configured to, in response to determining that the vehicle 1 can be controlled in accordance with said obtained acceleration condition using said set of auxiliary brakes 10, control said set of auxiliary brakes 10 in accordance with said obtained acceleration condition of the vehicle 1.

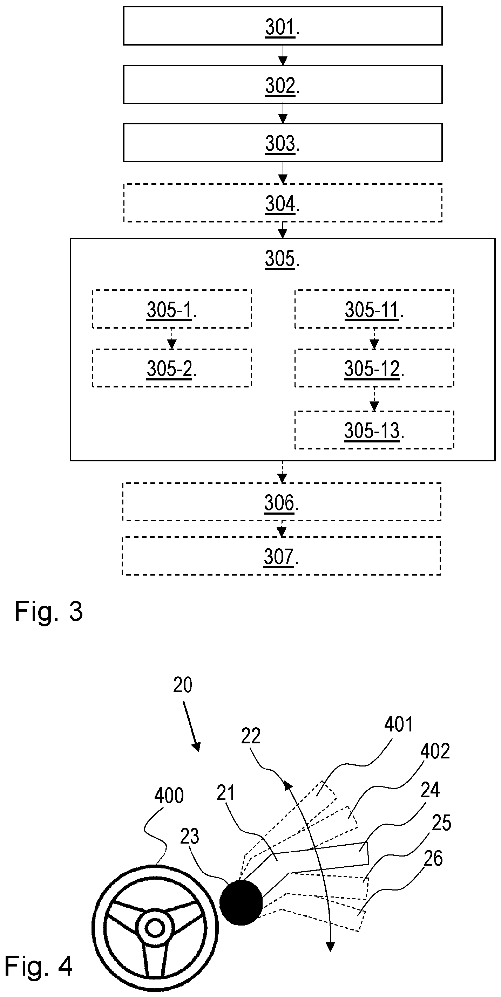

**FIG. 3** is a flowchart illustrating a method according to one example. The method may be performed by the computer system 500, and in particular the processor device 502.

The method is for controlling an acceleration of the vehicle 1. The vehicle 1 comprises the set of auxiliary brakes 10, comprising at least one auxiliary brake, for retarding said vehicle 1. Dashed boxes in FIG. 3 illustrates optional actions.

The method may comprise one or more out of the following actions, which actions can be taken in any suitable order.

### Action 301.

The method comprises, obtaining an acceleration condition of the vehicle 1. The acceleration condition is indicative of any one out of: an acceleration of the vehicle 1, e.g., zero acceleration of the vehicle 1, the absolute value of which is below a predetermined acceleration limit value; a predefined positive acceleration, e.g., +0.25 m/s², of the vehicle 1, and a predefined negative acceleration of the vehicle 1, e.g., -0.25 m/s². In some examples, the absolute value of the predefined positive acceleration is larger than the predetermined acceleration limit value, and the absolute value of the predefined negative acceleration is larger than the predetermined acceleration limit value.

### Action 302.

The method comprises, obtaining drive condition information of the vehicle 1.

The drive condition information may for example comprise any one or more out of the following:
- status of an accelerator pedal of the vehicle 1, e.g., whether or not the accelerator pedal is pressed or released,
- status of a brake pedal of the vehicle 1, e.g., whether or not the brake pedal is pressed or released,
- status of whether or not the vehicle 1 is in a cruise control mode or adaptive cruise control mode,
- an acceleration of the vehicle 1, and
- a speed of the vehicle 1.

### Action 303.

The method comprises, on the basis of said drive condition information, e.g., as obtained in Action 302, determining whether or not the vehicle 1 can be controlled in accordance with the obtained acceleration condition using said set of auxiliary brakes 10.

In some embodiments, determining whether or not the vehicle 1 can be controlled in accordance with the obtained acceleration condition using said set of auxiliary brakes 10 comprises detecting, e.g., based on the obtained drive condition information, that there is an absence of a requested load of the engine of the vehicle 1. In other words, only when detecting that there is an absence of a requested load of the engine of the vehicle 1, the vehicle 1 may be controlled in accordance with the obtained acceleration condition using said set of auxiliary brakes 10.

In some embodiments, detecting that there is an absence of a requested load of the engine of the vehicle 1 comprises detecting that an accelerator pedal of the vehicle 1 is in a released state, i.e., the accelerator pedal of the vehicle 1 is not being pressed.

Additionally, determining whether or not the vehicle 1 can be controlled in accordance with the obtained acceleration condition using said set of auxiliary brakes 10 comprises detecting e.g., based on the obtained drive condition information, that there is an absence of activated cruise control of the vehicle 1. In other words, only when detecting that there is an absence of activated cruise control, the vehicle 1 can be controlled in accordance with the obtained acceleration condition using said set of auxiliary brakes 10. Cruise control as used herein may mean any suitable cruise control procedure, e.g., wherein a vehicle is to maintain a certain speed, and/or an adaptive cruise control procedure, e.g., for maintaining a safe distance to a target vehicle.

Additionally, determining whether or not the vehicle 1 can be controlled in accordance with the obtained acceleration condition using said set of auxiliary brakes 10 comprises detecting e.g., from the obtained drive condition information, that there is an absence of a service brake request of the vehicle 1. In other words, only when detecting that there is an absence of a service brake request, the vehicle 1 can be controlled in accordance with the obtained acceleration condition using said set of auxiliary brakes 10.

In some embodiments, detecting that there is an absence of a service brake request of the vehicle 1 comprises detecting, e.g., based on the obtained drive condition information, that a brake pedal of the vehicle 1 is in a released state, i.e., the brake pedal of the vehicle 1 is not being pressed.

In some embodiments, determining whether or not the vehicle 1 can be controlled in accordance with the obtained acceleration condition using said set of auxiliary brakes 10 comprises determining, e.g., based on the obtained drive condition information, that a current acceleration or speed of the vehicle 1 is lower than a control threshold. The control threshold may be a threshold which limits a safety margin for acceleration and/or speed of the vehicle 1 and/or is a threshold which indicates the highest allowable acceleration and/or speed of the vehicle 1. In other words, the vehicle 1 may in some scenarios not control the set of auxiliary brakes 10 to meet the acceleration condition if the acceleration condition requests an acceleration which is dangerous and/or is higher than what the vehicle 1 can achieve.

In some embodiments, determining whether or not the vehicle 1 can be controlled in accordance with the obtained acceleration condition using said set of auxiliary brakes 10 comprises determining, e.g., based on the obtained drive condition information, whether traction control and/or brake blending is activated, in which case it is determined that the vehicle 1 cannot be controlled in accordance with the obtained acceleration condition.

### Action 304.

In some embodiments, the method comprises, receiving a signal indicative of current acceleration of said vehicle 1. The signal may be received by using the set of sensors 30 to measure the current acceleration, or to measure a speed and/or distance over time of the vehicle 1, and using the obtained sensor measurements to derive the current acceleration of said vehicle 1.

### Action 305.

The method comprises, in response to determining that the vehicle 1 can be controlled in accordance with said obtained acceleration condition using said set of auxiliary brakes 10, e.g., as in action 303, controlling said set of auxiliary brakes 10 in accordance with said obtained acceleration condition of the vehicle 1.

In some embodiments, controlling said set of auxiliary brakes 10 is performed using a closed loop control that uses the signal indicative of the current acceleration and the obtained acceleration condition.

The controller of a control system, e.g., the computer system 500, may control the closed loop control. The controller may have two parts, a feed-forward and a closed-loop Proportional-Integral-Derivative (PID) controller. The initial state may be given by the feed-forward, which uses a vehicle and/or environment mathematical model with vehicle 1 measurements, to estimate an amount of force and/or torque needed to result in some acceleration for the vehicle 1. The measurements and/or model may comprise any suitable parameters such as the obtained drive condition, road inclination angle, Gross Vehicle Weight Rating (GCVW), or a combination thereof. As any model may incur some errors in its calculations with respect to a physical implementation, the closed-loop PID compensates for the error over time by comparing the actual acceleration of the vehicle 1 against the obtained acceleration condition, i.e. the acceleration target.

In some embodiments, controlling said set of auxiliary brakes 10 in accordance with said obtained acceleration condition of the vehicle 1 is performed by employing a control procedure. The control procedure may be described by the following actions 305-1, 305-2, and/or the following actions 305-11, 305-12, 305-13 performed in any suitable order.

In other words, controlling said set of auxiliary brakes 10 may be performed with respect to any one or more determinations or applications as set out in actions 305-1, 305-2, 305-11, 305-12, 305-13, separately or in combination.

### Action 305-1.

The control procedure may comprise obtaining a current acceleration of the vehicle 1, e.g., by direct measurement using the set of sensors 30, and/or by deriving the current acceleration in any suitable manner.

### Action 305-2.

The control procedure may further comprise, when the obtained current acceleration exceeds the acceleration indicated by the acceleration condition, applying an increased braking load on at least one of the set of auxiliary brakes 10, but when the current acceleration is less than the acceleration indicated by the acceleration condition, applying a decreased braking load on at least one of the set of auxiliary brakes 10. In this way, the control procedures ensures that the acceleration condition is met, merely by increasing and decreasing the braking load. When an inclination of a vehicle 1 changes over a short distance, e.g., 100m, from steep downhill, to at least momentarily a zero road inclination angle, and further to a small downhill angle, the vehicle 1 can keep its acceleration by automatically increasing/decreasing the braking load without having to manually adjust the braking and/or speed/acceleration of the vehicle 1.

### Action 305-11.

In some embodiments, said vehicle 1 comprises the driveline adapted to propel said vehicle 1. In some of these embodiments, said control procedure comprises estimating a first vehicle acceleration of the vehicle 1 that can be obtained with the driveline of the vehicle 1 being engaged. The driveline being engaged means that at least some frictional forces will be applied to the vehicle 1 which will affect the acceleration of the vehicle 1. Estimating the first vehicle acceleration of the vehicle 1 that can be obtained with the driveline of the vehicle 1 being engaged may be performed in any suitable manner, for example using a predetermined vehicle dynamics model. The predetermined vehicle dynamics model may be a model of the vehicle 1 comprising any one or more out of the following parameters:
- engine/motors friction of the vehicle 1,
- gearbox losses of the vehicle 1,
- driveline losses of the driveline in the vehicle 1, and
- parasitic losses, e.g., from an alternator of the vehicle 1 and/or from an air conditioner of the vehicle 1.

### Action 305-12.

In some embodiments, said control procedure further comprises estimating a second vehicle 1 acceleration of the vehicle 1 that can be obtained with at least a portion of the driveline of the vehicle 1 being disengaged.

Estimating the second vehicle acceleration of the vehicle 1 that can be obtained with the driveline of the vehicle 1 being disengaged may be performed in any suitable manner, for example using the predetermined vehicle dynamics model.

### Action 305-13.

In some embodiments, said control procedure further comprises, determining whether to engage the driveline of the vehicle 1 or to disengage at least a portion of the driveline of the vehicle 1 by comparing the first vehicle 1 acceleration and the second vehicle 1 acceleration with the acceleration indicated by the acceleration condition. In other words, the driveline will be disengaged and/or engaged only when suitable to meet the acceleration condition.

In some embodiments, determining whether to engage the driveline of the vehicle 1 or to disengage at least a portion of the driveline of the vehicle 1 comprises determining to engage the driveline of the vehicle 1 when the driveline of the vehicle 1 is disengaged and a difference between the first vehicle 1 acceleration and the second vehicle 1 acceleration is above a first threshold. In other words, the driveline will be engaged if the difference in meeting the acceleration condition is great enough, i.e. above the first threshold.

In a corresponding manner, determining whether to engage the driveline of the vehicle 1 or to disengage at least a portion of the driveline of the vehicle 1 comprises determining to disengage at least a portion of the driveline of the vehicle 1 when the driveline of the vehicle 1 is engaged and when the difference between the first vehicle 1 acceleration and the second vehicle 1 acceleration is above a second threshold. In other words, the driveline will be disengaged if the difference in meeting the acceleration condition is great enough, i.e. above the second threshold.

Since a disengaged driveline may be unwanted for some drivers who want to have more rapid control to increase the acceleration of the vehicle 1, the first threshold may for some embodiments be set low and the second threshold may be set high, e.g., the first threshold being lower than the second threshold. This means that the driveline will more often be engaged whenever engaging the driveline will meet the acceleration condition.

Disengaging the driveline may in some scenarios cause safety and/or comfort concerns that need to be handled. In some embodiments, determining to disengage at least a portion of the driveline comprises determining that the vehicle motion fulfils a condition pertaining to safety condition of the vehicle and/or a comfort of user of the vehicle. Determining that the vehicle motion fulfils a condition pertaining to safety condition of the vehicle and/or a comfort of user of the vehicle may for example comprise determining that the vehicle is travelling at below a set speed limit, e.g., lower than 50 kilometers per hour, and/or determining that the acceleration of the vehicle is less than a maximum allowed acceleration.

Furthermore, in some embodiments, determining to disengage at least a portion of the driveline comprises obtaining an inclination angle of a road travelled by, or to be travelled by, the vehicle 1, and determining that the inclination angle fulfils a condition, e.g., the angle is smaller than a threshold.

In some embodiments herein, controlling said set of auxiliary brakes 10 in accordance with said obtained acceleration condition of the vehicle 1 comprises refraining from activating the service brakes. As an alternative, some embodiments herein may comprise utilizing the service brakes in combination with the set of auxiliary brakes 10 in accordance with said obtained acceleration condition.

### Action 306

In some embodiments, the method further comprises, when the set of auxiliary brakes 10 is controlled in accordance with the acceleration condition indicating the predefined negative acceleration of the vehicle 1, obtaining an indication to adjust the negative acceleration condition of the vehicle 1. This may be to further adjust the acceleration to be reduced e.g., while refraining from utilizing service brakes. The adjustment may be used to adjust the acceleration in a fine grained manner.

The indication may be received in any suitable manner, e.g., by use of a button or other input, e.g., using the user interface 20.

In one embodiment, a quick press on a brake pedal of the vehicle 1, e.g., for less than a predetermined time period such as 0.1 seconds, the indication to adjust the negative acceleration condition of the vehicle 1 may be issued. To issue the indication to adjust the negative acceleration condition of the vehicle 1, the quick press on the brake pedal may need to be iterated a set number of times, e.g., repeatedly pressed and released.

### Action 307

In some embodiments, the method further comprises, in response to obtaining the indication to adjust the negative acceleration condition of the vehicle 1, adjusting the predefined negative acceleration of the vehicle 1 with a predefined negative acceleration modifier. The predefined negative acceleration of the vehicle 1 may thus be lower, i.e. still negative with a larger absolute value. The negative acceleration modifier may be any suitable value. In some cases the adjusting the predefined negative acceleration of the vehicle 1 with a predefined negative acceleration modifier may double the negative acceleration of the vehicle 1.

In some embodiments, adjusting the predefined negative acceleration of the vehicle 1 with a predefined negative acceleration modifier may be performed a predetermined number of times and/or until the predefined negative acceleration of the vehicle 1 reaches a maximum absolute value. For example, it may be possible to adjust the predefined negative acceleration of the vehicle 1 three times to be a larger absolute value each time.

As a first example, the predefined negative acceleration of the vehicle 1 may be represented by an acceleration -X m/s². -X may for example be - 0.25 m/s². The predefined negative acceleration modifier may also be represented by -X m/s². In the first example, after a first adjustment the adjusted acceleration may be -2X m/s². In the first example, after a second adjustment the second adjusted acceleration may be -3X m/s². In the first example, after a third adjustment the third adjusted acceleration may be -4X m/s². As a second example, the predefined negative acceleration modifier may be represented by -Y m/s². Y may have a smaller absolute value than X, i.e. such that a fine granular adjustment can be made. In the second example, after a first adjustment the adjusted acceleration may be -X-Y m/s². In the second example, after a second adjustment the second adjusted acceleration may be -X-2Y m/s². In the second example, after a third adjustment the third adjusted acceleration may be -X-3Y m/s².

The adjustment applied to the predefined negative acceleration of the vehicle 1 by the predefined negative acceleration modifier may be removed, i.e. the acceleration may be adjusted back to the original value of the predefined negative acceleration of the vehicle 1, whenever an acceleration condition of the vehicle 1 is changed and/or upon detecting a condition indicating to reset the adjustment applied to the predefined negative acceleration. The condition indicating to reset the adjustment may comprise detecting a request to increase a load the engine of the vehicle 1, such as detecting when the accelerator pedal is pressed.

**FIG. 4** illustrates an example of the user interface 20 when the user interface 20 comprises the stalk 21 in the vehicle 1. A stalk, such as the stalk 21, is common to use for drivers of vehicles, such as the vehicle 1, to operate and can efficiently be used without having to diverge the driver's attention from the road, and thereby the stalk 21 improves cognitive abilities of the driver of the vehicle 1. When the user interface 20 comprises the stalk 21, it is typically located in proximity to a **steering wheel 400** of the vehicle 1, e.g., within a predetermined distance from the steering wheel 400 such that a driver can easily operate the stalk 21 while also handling the steering wheel 400. In this example of FIG.4, the stalk 21 is used for setting the acceleration condition of embodiments herein. The stalk 21 may be adapted to assume a finite number of discrete positions. The finite number is at least three. In the example scenario of FIG. 4, there are at least five different discrete positions. For at least three positions, typically each discrete position, of the stalk 21 may be mapped to a respective acceleration condition. In this example, the positive position 24 is mapped to a predefined positive acceleration, e.g., +0.25 m/s², the maintaining position 25 is mapped to maintaining an acceleration lower than a limit value, e.g., 0 m/s², and a negative position 26 mapped to a predefined negative acceleration, e.g., -0.25 m/s². Additionally, further discrete positions may also be a possibility. In the example scenario of FIG. 4, **a dynamic engine brake position 401 and a disabled position 402** are additionally part of the user interface 20.

The dynamic engine brake position 401 may be mapped to a configuration of the vehicle 1 causing the set of auxiliary brakes 20 of the vehicle 1 to be directly controlled by a brake pedal position of the vehicle 1. is mapped.

The disabled position 402 may be mapped to a configuration of the vehicle 1 causing no actuation of the set of auxiliary brakes 20.

Additionally there may be a button to press on the stalk (not shown in FIG.4). Pressing the button may be mapped to a configuration of the vehicle 1 causing a maximum brake torque that can be provided by the set of auxiliary brakes 20, e.g., a full engine brake torque, regardless of the discrete position of the stalk. When pressing the button, service brakes of the vehicle 1 may be used during a transient time period, e.g., ca 2 seconds, where a gearbox of the vehicle 1 is usually shifting and an exhaust back-pressure is building up.

In the example of FIG.4, the stalk 21 is set to the positive position 24. This means that the set of auxiliary brakes 10 may be controlled in accordance to the predefined positive acceleration mapped. In other words, the vehicle 1 may then accelerate with the acceleration mapped to the positive positions 24.

In the example of FIG. 4, the stalk 21 can be put into any of the discrete positions 24, 25, 26, 401, 402 available as discussed above.

The stalk 21 may be switched to different discrete positions 24, 25, 26, 401, 402 by switching the stalk position with respect to the anchor point 23, in the switching directions 22.

A driver of the vehicle 1 may for example switch the stalk 21 of the user interface 20 to the maintaining position 25. This means that set of auxiliary brakes 10 may be controlled in accordance to maintaining an acceleration of the vehicle 1, the absolute value of which is below a predetermined acceleration limit value. In other words, the acceleration will be maintained to be lower than the limit value, e.g., zero or close to zero. In other words, the maintaining position 25 may control the set of auxiliary brakes to maintain the speed of the vehicle 1.

The driver can then, when the stalk 21 is in the maintaining position 25, use pedals and gearbox interface of the vehicle 1 to bring the vehicle 1 to a certain speed and gear. When using the pedals and/or gearbox interface, the vehicle 1 may operate using a normal operation, e.g., without controlling the set of auxiliary brakes 10. As soon as the pedals are released, the set of auxiliary brakes 10 may then be controlled accordingly to the acceleration lower than the limit value, e.g., 0 m/s², and maintain the set speed of the vehicle 1. At any moment, the driver of the vehicle 1 may push the stalk 21 to position 24 or pull it down to position 26 to respectively increase or decrease the speed/acceleration of the vehicle and then pull it back to position 25 in order to hold the set speed. This allows for a simple and efficient way of controlling the acceleration of the vehicle 1.

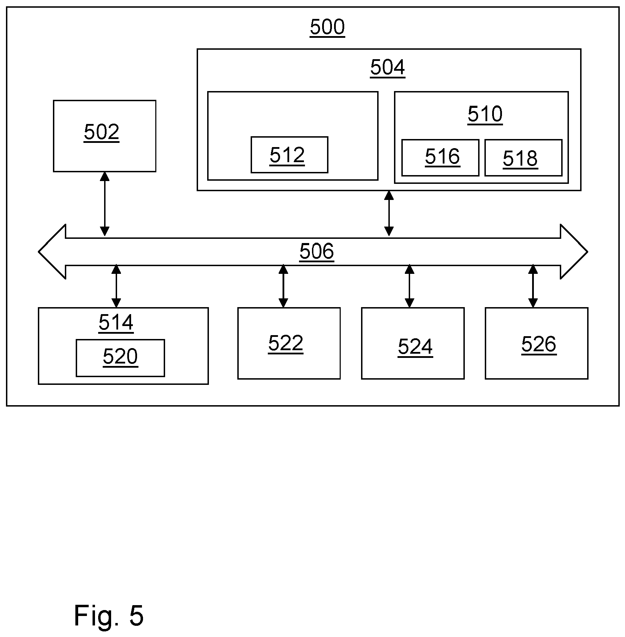

**FIG. 5** is a schematic diagram of the computer system **500** for implementing examples disclosed herein. The computer system **500** is adapted to execute instructions from a computer-readable medium to perform these and/or any of the functions or processing described herein. The computer system **500** may be connected (e.g., networked) to other machines in a LAN, an intranet, an extranet, or the Internet. While only a single device is illustrated, the computer system **500** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **500** may comprise at least one computing device or electronic device capable of including firmware, hardware, and/or executing software instructions to implement the functionality described herein. The computer system **500** may include the processor device **502** (may also be referred to as a control unit), a memory **504,** and a system bus **506.** The computer system **500** may include at least one computing device having the processor device **502.** The system bus **506** provides an interface for system components including, but not limited to, the memory **504** and the processor device **502.** The processor device **502** may include any number of hardware components for conducting data or signal processing or for executing computer code stored in memory **504.** The processor device **502** (e.g., control unit) may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processor device may further include computer executable code that controls operation of the programmable device.

The system bus **506** may be any of several types of bus structures that may further interconnect to a memory bus (with or without a memory controller), a peripheral bus, and/or a local bus using any of a variety of bus architectures. The memory **504** may be one or more devices for storing data and/or computer code for completing or facilitating methods described herein. The memory **504** may include database components, object code components, script components, or other types of information structure for supporting the various activities herein. Any distributed or local memory device may be utilized with the systems and methods of this description. The memory **504** may be communicably connected to the processor device **502** (e.g., via a circuit or any other wired, wireless, or network connection) and may include computer code for executing one or more processes described herein. The memory **504** may include non-volatile memory **508** (e.g., read-only memory (ROM), erasable programmable read-only memory (EPROM), electrically erasable programmable read-only memory (EEPROM), etc.), and volatile memory **510** (e.g., random-access memory (RAM)), or any other medium which can be used to carry or store desired program code in the form of machine-executable instructions or data structures and which can be accessed by a computer or other machine with a processor device **502.** A basic input/output system (BIOS) **512** may be stored in the non-volatile memory **508** and can include the basic routines that help to transfer information between elements within the computer system **500.**

The computer system **500** may further include or be coupled to a non-transitory computer-readable storage medium such as the storage device **514,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **514** and other drives associated with computer-readable media and computer-usable media may provide non-volatile storage of data, data structures, computer-executable instructions, and the like.

A number of modules can be implemented as software and/or hard-coded in circuitry to implement the functionality described herein in whole or in part. The modules may be stored in the storage device **514** and/or in the volatile memory **510,** which may include an operating system **516** and/or one or more program modules **518.** All or a portion of the examples disclosed herein may be implemented as a computer program product **520** stored on a transitory or non-transitory computer-usable or computer-readable storage medium (e.g., single medium or multiple media), such as the storage device **514,** which includes complex programming instructions (e.g., complex computer-readable program code) to cause the processor device **502** to carry out the steps described herein. Thus, the computer-readable program code can comprise software instructions for implementing the functionality of the examples described herein when executed by the processor device **502.** The processor device **502** may serve as a controller or control system for the computer system **500** that is to implement the functionality described herein.

The computer system **500** also may include an input device interface **522** (e.g., input device interface and/or output device interface). The input device interface **522** may be configured to receive input and selections to be communicated to the computer system **500** when executing instructions, such as from a keyboard, mouse, touch-sensitive surface, etc. Such input devices may be connected to the processor device **502** through the input device interface **522** coupled to the system bus **506** but can be connected through other interfaces such as a parallel port, an Institute of Electrical and Electronic Engineers (IEEE) 1394 serial port, a Universal Serial Bus (USB) port, an IR interface, and the like. The computer system **500** may include an output device interface **524** configured to forward output, such as to a display, a video display unit (e.g., a liquid crystal display (LCD) or a cathode ray tube (CRT)). The computer system **500** may also include a communications interface **526** suitable for communicating with a network as appropriate or desired.

The operational steps described in any of the exemplary aspects herein are described to provide examples and discussion. The steps may be performed by hardware components, may be embodied in machine-executable instructions to cause a processor to perform the steps, or may be performed by a combination of hardware and software.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present invention, as defined by the appended claims. In the drawings and specification, there have been disclosed aspects for purposes of illustration only and not for purposes of limitation, the scope of the invention being set forth in the following claims.

## Claims

1. A computer system (500) comprising a processor device (502) configured to control an acceleration of a vehicle (1), the vehicle (1) comprises a set of auxiliary brakes (10), comprising at least one auxiliary brake, for retarding said vehicle (1), and wherein said vehicle (1) comprises a driveline adapted to propel said vehicle (1) the processor device (502) is further configured to:
obtain an acceleration condition of the vehicle (1), the acceleration condition being indicative of any one out of:
an acceleration of the vehicle (1), the absolute value of which is below a predetermined acceleration limit value;
a predefined positive acceleration of the vehicle (1), and
a predefined negative acceleration of the vehicle (1),
the processor device (502) is further configured to obtain drive condition information of the vehicle (1) and on the basis of said drive condition information, determine whether or not the vehicle (1) can be controlled in accordance with the obtained acceleration condition using said set of auxiliary brakes (10);
the processor device (502) is further configured to, in response to determining that the vehicle (1) can be controlled in accordance with said obtained acceleration condition using said set of auxiliary brakes (10), control said set of auxiliary brakes (10) in accordance with said obtained acceleration condition of the vehicle (1) **characterized in that**
the processor device (502) is further configured to control said set of auxiliary brakes (10) in accordance with said obtained acceleration condition of the vehicle (1) by employing a control procedure, the control procedure comprising:
- estimating a first vehicle acceleration of the vehicle (1) that can be obtained with the driveline of the vehicle (1) being engaged, and
- estimating a second vehicle acceleration of the vehicle (1) that can be obtained with at least a portion of the driveline of the vehicle (1) being disengaged, and
- determining whether to engage the driveline of the vehicle (1) or to disengage at least a portion of the driveline of the vehicle (1) by comparing the first vehicle acceleration and the second vehicle acceleration with the acceleration indicated by the acceleration condition.

2. A computer-implemented method for controlling an acceleration of a vehicle (1), the vehicle (1) comprises a set of auxiliary brakes (10), comprising at least one auxiliary brake, for retarding said vehicle (1), and wherein said vehicle (1) comprises a driveline adapted to propel said vehicle (1), the method further comprises:
by a processor device (502) of a computer system (500), obtaining (301) an acceleration condition of the vehicle (1), the acceleration condition being indicative of any one out of:
an acceleration of the vehicle (1), the absolute value of which is below a predetermined acceleration limit value;
a predefined positive acceleration of the vehicle (1), and
a predefined negative acceleration of the vehicle (1),
by the processor device (502), obtaining (302) drive condition information of the vehicle (1) and on the basis of said drive condition information, determining (303) whether or not the vehicle (1) can be controlled in accordance with the obtained acceleration condition using said set of auxiliary brakes (10);
by the processor device (502), in response to determining that the vehicle (1) can be controlled in accordance with said obtained acceleration condition using said set of auxiliary brakes (10), controlling (305) said set of auxiliary brakes (10) in accordance with said obtained acceleration condition of the vehicle (1) **characterized in that** controlling (305) said set of auxiliary brakes (10) in accordance with said obtained acceleration condition of the vehicle (1) is performed by employing a control procedure, the control procedure comprising:
- by the processor device (502), estimating (305-11) a first vehicle acceleration of the vehicle (1) that can be obtained with the driveline of the vehicle (1) being engaged, and
- by the processor device (502), estimating (305-12) a second vehicle acceleration of the vehicle (1) that can be obtained with at least a portion of the driveline of the vehicle (1) being disengaged, and
- by the processor device (502), determining (305-13) whether to engage the driveline of the vehicle (1) or to disengage at least a portion of the driveline of the vehicle (1) by comparing the first vehicle acceleration and the second vehicle acceleration with the acceleration indicated by the acceleration condition.

3. The method of claim 2 wherein controlling (305) said set of auxiliary brakes (10) in accordance with said obtained acceleration condition of the vehicle (1) is performed by the control procedure further comprising:
- by the processor device (502), obtaining (305-1) a current acceleration of the vehicle (1);
- by the processor device (502), when the current acceleration exceeds the acceleration indicated by the acceleration condition, applying (305-2) an increased braking load on at least one of the set of auxiliary brakes (10), but
- by the processor device (502), when the current acceleration is less than the acceleration indicated by the acceleration condition, applying (305-2) a decreased braking load on at least one of the set of auxiliary brakes (10).

4. The method of any one of claims 2-3, further comprising:
- by the processor device (502), receiving (304) a signal indicative of current acceleration of said vehicle (1), and
- wherein controlling (305) said set of auxiliary brakes (10) is performed using a closed loop control that uses the signal indicative of the current acceleration and the obtained acceleration condition.

5. The method of any one of claims 2-4, wherein determining (305-13) whether to engage the driveline of the vehicle (1) or to disengage at least a portion of the driveline of the vehicle (1) comprises:
- determining to engage the driveline of the vehicle (1) when the driveline of the vehicle (1) is disengaged and a difference between the first vehicle (1) acceleration and the second vehicle (1) acceleration is above a first threshold, and
- determining to disengage at least a portion of the driveline of the vehicle (1) when the driveline of the vehicle (1) is engaged and when the difference between the first vehicle (1) acceleration and the second vehicle (1) acceleration is above a second threshold.

6. The method of any one of claims 2-5, wherein determining (305) whether or not the vehicle (1) can be controlled in accordance with the obtained acceleration condition using said set of auxiliary brakes (10) comprises detecting that there is an absence of a requested load of the engine of the vehicle (1).

7. The method according claim 6, wherein detecting that there is an absence of a requested load of the engine of the vehicle (1) comprises: by the processor device (502), detecting that an accelerator pedal of the vehicle (1) is in a released state.

8. The method according to any one of claims 2-7, further comprising:
by the processor device (502), when the set of auxiliary brakes (10) is controlled in accordance with the acceleration condition indicating the predefined negative acceleration of the vehicle (1), and in response to obtaining (306) an indication to adjust the negative acceleration condition of the vehicle (1), adjusting (307) the predefined negative acceleration of the vehicle (1) with a predefined negative acceleration modifier.

9. A vehicle (1) comprising a set of auxiliary brakes (10) and a computer system (500) according to claim 1.

10. The vehicle (1) according to claim 9, wherein the vehicle (1) comprises a user interface (20) for setting an acceleration condition, the user interface (20) is adapted to assume at least three discrete positions, and wherein at least three discrete positions are mapped to a respective acceleration condition.

11. A computer program product comprising program code for performing, when executed by the processor device (502), the method of any of claims 2-8.

12. A non-transitory computer-readable storage medium comprising instructions, which when executed by the processor device (502), cause the processor device (502) to perform the method of any of claims 2-8.

## Patentansprüche

1. Computersystem (500), umfassend eine Prozessorvorrichtung (502), die konfiguriert ist, um eine Beschleunigung eines Fahrzeugs (1) zu steuern, wobei das Fahrzeug (1) einen Satz von Hilfsbremsen (10) umfasst, der mindestens eine Hilfsbremse umfasst, um das Fahrzeug (1) zu verzögern, und wobei das Fahrzeug (1) einen Antriebsstrang umfasst, der angepasst ist, um das Fahrzeug (1) anzutreiben, wobei die Prozessorvorrichtung (502) ferner konfiguriert ist zum:
Erhalten eines Beschleunigungszustands des Fahrzeugs (1), wobei der Beschleunigungszustand eines anzeigt von:
einer Beschleunigung des Fahrzeugs (1), deren Absolutwert unter einem vorbestimmten Beschleunigungsgrenzwert liegt;
einer vordefinierten positiven Beschleunigung des Fahrzeugs (1), und
einer vordefinierten negativen Beschleunigung des Fahrzeugs (1),
wobei die Prozessorvorrichtung (502) ferner konfiguriert ist, um Informationen über den Fahrzustand des Fahrzeugs (1) zu erhalten und basierend auf den Informationen über den Fahrzustand zu bestimmen, ob das Fahrzeug (1) gemäß dem erhaltenen Beschleunigungszustand unter Verwendung des Satzes von Hilfsbremsen (10) gesteuert werden kann oder nicht;
wobei die Prozessorvorrichtung (502) ferner konfiguriert ist, um in Reaktion auf das Bestimmen, dass das Fahrzeug (1) gemäß dem erhaltenen Beschleunigungszustand unter Verwendung des Satzes von Hilfsbremsen (10) gesteuert werden kann, den Satz von Hilfsbremsen (10) gemäß dem erhaltenen Beschleunigungszustand des Fahrzeugs (1) zu steuern,
**dadurch gekennzeichnet, dass** die Prozessorvorrichtung (502) ferner konfiguriert ist, um den Satz von Hilfsbremsen (10) gemäß dem erhaltenen Beschleunigungszustand des Fahrzeugs (1) durch Anwenden eines Steuerverfahrens zu steuern, das Steuerverfahren umfassend:
- Schätzen einer ersten Fahrzeugbeschleunigung des Fahrzeugs (1), die bei eingekuppeltem Antriebsstrang des Fahrzeugs (1) erreicht werden kann, und
- Schätzen einer zweiten Fahrzeugbeschleunigung des Fahrzeugs (1), die erreicht werden kann, wenn mindestens ein Abschnitt des Antriebsstrangs des Fahrzeugs (1) ausgekuppelt ist, und
- Bestimmen, ob der Antriebsstrang des Fahrzeugs (1) eingekuppelt oder mindestens ein Abschnitt des Antriebsstrangs des Fahrzeugs (1) ausgekuppelt werden soll, durch Vergleichen der ersten Fahrzeugbeschleunigung und der zweiten Fahrzeugbeschleunigung mit der durch den Beschleunigungszustand angegebenen Beschleunigung.

2. Computerimplementiertes Verfahren zum Steuern einer Beschleunigung eines Fahrzeugs (1), wobei das Fahrzeug (1) einen Satz von Hilfsbremsen (10) umfasst, der mindestens eine Hilfsbremse zum Verzögern des Fahrzeugs (1) umfasst, und wobei das Fahrzeug (1) einen Antriebsstrang umfasst, der angepasst ist, um das Fahrzeug (1) anzutreiben, das Verfahren ferner umfassend:
durch eine Prozessorvorrichtung (502) eines Computersystems (500), Erhalten (301) eines Beschleunigungszustands des Fahrzeugs (1), wobei der Beschleunigungszustand eines anzeigt von:
einer Beschleunigung des Fahrzeugs (1), deren Absolutwert unter einem vorbestimmten Beschleunigungsgrenzwert liegt;
einer vordefinierten positiven Beschleunigung des Fahrzeugs (1), und
einer vordefinierten negativen Beschleunigung des Fahrzeugs (1),
durch die Prozessorvorrichtung (502), Erhalten (302) von Informationen über den Fahrzustand des Fahrzeugs (1) und basierend auf den Informationen über den Fahrzustand, Bestimmen (303), ob das Fahrzeug (1) gemäß dem erhaltenen Beschleunigungszustand unter Verwendung des Satzes von Hilfsbremsen (10) gesteuert werden kann oder nicht;
durch die Prozessorvorrichtung (502), in Reaktion auf das Bestimmen, dass das Fahrzeug (1) gemäß dem erhaltenen Beschleunigungszustand unter Verwendung des Satzes von Hilfsbremsen (10) gesteuert werden kann, Steuern (305) des Satzes von Hilfsbremsen (10) gemäß dem erhaltenen Beschleunigungszustand des Fahrzeugs (1), **dadurch gekennzeichnet, dass**
das Steuern (305) des Satzes von Hilfsbremsen (10) gemäß dem erhaltenen Beschleunigungszustand des Fahrzeugs (1) durch Anwendung eines Steuerverfahrens durchgeführt wird, die Steuerprozedur umfassend:
- durch die Prozessorvorrichtung (502), Schätzen (305-11) einer ersten Fahrzeugbeschleunigung des Fahrzeugs (1), die bei eingekuppeltem Antriebsstrang des Fahrzeugs (1) erreicht werden kann, und
- durch die Prozessorvorrichtung (502), Schätzen (305-12) einer zweiten Fahrzeugbeschleunigung des Fahrzeugs (1), die erreicht werden kann, wenn mindestens ein Abschnitt des Antriebsstrangs des Fahrzeugs (1) ausgekuppelt ist, und
- durch die Prozessorvorrichtung (502), Bestimmen (305-13), ob der Antriebsstrang des Fahrzeugs (1) eingekuppelt oder mindestens ein Abschnitt des Antriebsstrangs des Fahrzeugs (1) ausgekuppelt werden soll, durch Vergleichen der ersten Fahrzeugbeschleunigung und der zweiten Fahrzeugbeschleunigung mit der durch den Beschleunigungszustand angegebenen Beschleunigung.

3. Verfahren nach Anspruch 2, wobei das Steuern (305) des Satzes von Hilfsbremsen (10) gemäß dem erhaltenen Beschleunigungszustand des Fahrzeugs (1) durchgeführt wird, indem das Steuerverfahren ferner umfasst:
- durch die Prozessorvorrichtung (502), Erhalten (305-1) einer aktuellen Beschleunigung des Fahrzeugs (1);
- durch die Prozessorvorrichtung (502), wenn die aktuelle Beschleunigung die durch die Beschleunigungsbedingung angegebene Beschleunigung übersteigt, Anlegen (305-2) einer erhöhten Bremslast an mindestens eine des Satzes von Hilfsbremsen (10), aber
- durch die Prozessorvorrichtung (502), wenn die aktuelle Beschleunigung unter der durch die Beschleunigungsbedingung angegebenen Beschleunigung liegt, Anlegen (305-2) einer verringerten Bremslast an mindestens eine des Satzes von Hilfsbremsen (10).

4. Verfahren nach einem der Ansprüche 2 bis 3, ferner umfassend:
- durch die Prozessorvorrichtung (502), Empfangen (304) eines Signals, das die aktuelle Beschleunigung des Fahrzeugs (1) anzeigt, und
- wobei das Steuern (305) des Satzes von Hilfsbremsen (10) unter Verwendung eines geschlossenen Steuerkreises durchgeführt wird, der das Signal verwendet, das die aktuelle Beschleunigung und den erhaltenen Beschleunigungszustand anzeigt.

5. Verfahren nach einem der Ansprüche 2 bis 4, wobei das Bestimmen (305-13), ob der Antriebsstrang des Fahrzeugs (1) eingekuppelt oder mindestens ein Abschnitt des Antriebsstrangs des Fahrzeugs (1) ausgekuppelt werden soll, umfasst:
- Bestimmen, den Antriebsstrang des Fahrzeugs (1) einzukuppeln, wenn der Antriebsstrang des Fahrzeugs (1) ausgekuppelt ist und eine Differenz zwischen der ersten Beschleunigung des Fahrzeugs (1) und der zweiten Beschleunigung des Fahrzeugs (1) über einem ersten Schwellenwert liegt, und
- Bestimmen, den Antriebsstrang des Fahrzeugs (1) mindestens teilweise auszukuppeln, wenn der Antriebsstrang des Fahrzeugs (1) eingekuppelt ist und wenn die Differenz zwischen der ersten Beschleunigung des Fahrzeugs (1) und der zweiten Beschleunigung des Fahrzeugs (1) über einem zweiten Schwellenwert liegt.

6. Verfahren nach einem der Ansprüche 2 bis 5, wobei das Bestimmen (305), ob das Fahrzeug (1) gemäß der erhaltenen Beschleunigungsbedingung unter Verwendung des Satzes von Hilfsbremsen (10) gesteuert werden kann oder nicht, das Erkennen umfasst, dass keine angeforderte Last des Motors des Fahrzeugs (1) anliegt.

7. Verfahren nach Anspruch 6, wobei das Erkennen, dass keine angeforderte Last des Motors des Fahrzeugs (1) anliegt, umfasst: durch die Vorrichtung (502), Erkennen, dass ein Beschleunigungspedal des Fahrzeugs (1) in einem freigegebenen Zustand ist.

8. Verfahren nach einem der Ansprüche 2 bis 7, ferner umfassend:
durch die Prozessorvorrichtung (502), wenn der Satz von Hilfsbremsen (10) gemäß der Beschleunigungsbedingung gesteuert wird, die die vordefinierte negative Beschleunigung des Fahrzeugs (1) anzeigt, und als Reaktion auf das Erhalten (306) einer Anzeige zum Anpassen der negativen Beschleunigungsbedingung des Fahrzeugs (1), Anpassen (307) der vordefinierten negativen Beschleunigung des Fahrzeugs (1) mit einem vordefinierten negativen Beschleunigungsmodifikator.

9. Fahrzeug (1), umfassend einen Satz von Hilfsbremsen (10) und ein Computersystem (500) nach Anspruch 1.

10. Fahrzeug (1) nach Anspruch 9, wobei das Fahrzeug (1) eine Benutzerschnittstelle (20) zum Einstellen einer Beschleunigungsbedingung umfasst, wobei die Benutzerschnittstelle (20) angepasst ist, um mindestens drei separate Positionen einzunehmen, und wobei mindestens drei separate Positionen auf eine jeweilige Beschleunigungsbedingung abgebildet werden.

11. Computerprogrammprodukt, umfassend Programmcode zum Durchführen, wenn er durch die Prozessorvorrichtung (502) ausgeführt wird, des Verfahrens nach einem der Ansprüche 2 bis 8.

12. Nichtflüchtiges, computerlesbares Speichermedium, umfassend Anweisungen, die, wenn sie durch die Prozessorvorrichtung (502) ausgeführt werden, die Prozessorvorrichtung (502) veranlassen, das Verfahren nach einem der Ansprüche 2 bis 8 durchzuführen.

## Revendications

1. Système informatique (500) comprenant un dispositif processeur (502) configuré pour commander une accélération d'un véhicule (1), le véhicule (1) comprend un ensemble de freins auxiliaires (10), comprenant au moins un frein auxiliaire, pour ralentir ledit véhicule (1), et dans lequel ledit véhicule (1) comprend une ligne d'arbres de transmission adaptée à propulser ledit véhicule (1), le dispositif processeur (502) est en outre configuré pour :
obtenir une condition d'accélération du véhicule (1), la condition d'accélération indiquant l'une quelconque parmi :
une accélération du véhicule (1), dont la valeur absolue est inférieure à une valeur limite d'accélération prédéterminée ;
une accélération positive prédéfinie du véhicule (1), et
une accélération négative prédéfinie du véhicule (1),
le dispositif processeur (502) est en outre configuré pour obtenir des informations de condition de conduite du véhicule (1) et, sur la base desdites informations de condition de conduite, déterminer si le véhicule (1) peut ou non être commandé conformément à la condition d'accélération obtenue à l'aide dudit ensemble de freins auxiliaires (10) ;
le dispositif processeur (502) est en outre configuré pour, en réponse au fait de déterminer que le véhicule (1) peut être commandé conformément à ladite condition d'accélération obtenue à l'aide dudit ensemble de freins auxiliaires (10), commander ledit ensemble de freins auxiliaires (10) conformément à ladite condition d'accélération obtenue du véhicule (1),
**caractérisé en ce que** le dispositif processeur (502) est en outre configuré pour commander ledit ensemble de freins auxiliaires (10) conformément à ladite condition d'accélération obtenue du véhicule (1) en employant une procédure de commande, la procédure de commande comprenant :
- l'estimation d'une première accélération de véhicule du véhicule (1) qui peut être obtenue lorsque la ligne d'arbres de transmission du véhicule (1) est en prise, et
- l'estimation d'une seconde accélération de véhicule du véhicule (1) qui peut être obtenue avec au moins une partie de la ligne d'arbres de transmission du véhicule (1) étant désaccouplée, et
- le fait de déterminer s'il faut mettre en prise la ligne d'arbres de transmission du véhicule (1) ou s'il faut désaccoupler au moins une partie de la ligne d'arbres de transmission du véhicule (1) en comparant la première accélération de véhicule et la seconde accélération de véhicule avec l'accélération indiquée par la condition d'accélération.

2. Procédé mis en œuvre par ordinateur permettant de commander une accélération d'un véhicule (1), le véhicule (1) comprend un ensemble de freins auxiliaires (10), comprenant au moins un frein auxiliaire, pour ralentir ledit véhicule (1), et dans lequel ledit véhicule (1) comprend une ligne d'arbres de transmission adaptée à propulser ledit véhicule (1), le procédé comprend en outre :
par un dispositif processeur (502) d'un système informatique (500), l'obtention (301) d'une condition d'accélération du véhicule (1), la condition d'accélération indiquant l'une quelconque parmi :
une accélération du véhicule (1), la valeur absolue de laquelle est inférieure à une valeur limite d'accélération prédéterminée ;
une accélération positive prédéfinie du véhicule (1), et
une accélération négative prédéfinie du véhicule (1),
par le dispositif processeur (502), l'obtention (302) d'informations de condition de conduite du véhicule (1) et, sur la base desdites informations de condition de conduite, le fait de déterminer (303) si le véhicule (1) peut ou non être commandé conformément à la condition d'accélération obtenue à l'aide dudit ensemble de freins auxiliaires (10) ;
par le dispositif processeur (502), en réponse au fait de déterminer que le véhicule (1) peut être commandé conformément à ladite condition d'accélération obtenue à l'aide dudit ensemble de freins auxiliaires (10), la commande (305) dudit ensemble de freins auxiliaires (10) conformément à ladite condition d'accélération obtenue du véhicule (1), **caractérisé en ce que**
la commande (305) dudit ensemble de freins auxiliaires (10) conformément à ladite condition d'accélération obtenue du véhicule (1) est réalisée en employant une procédure de commande, la procédure de commande comprenant :
- par le dispositif processeur (502), l'estimation (305-11) d'une première accélération de véhicule du véhicule (1) qui peut être obtenue lorsque la ligne d'arbres de transmission du véhicule (1) est en prise, et
- par le dispositif processeur (502), l'estimation (305-12) d'une seconde accélération de véhicule du véhicule (1) qui peut être obtenue lorsqu'au moins une partie de la ligne d'arbres de transmission du véhicule (1) est désaccouplée, et
- par le dispositif processeur (502), le fait de déterminer (305-13) s'il faut mettre en prise la ligne d'arbres de transmission du véhicule (1) ou s'il faut désaccoupler au moins une partie de la ligne d'arbres de transmission du véhicule (1) en comparant la première accélération de véhicule et la seconde accélération de véhicule avec l'accélération indiquée par la condition d'accélération.

3. Procédé selon la revendication 2, dans lequel la commande (305) dudit ensemble de freins auxiliaires (10) conformément à ladite condition d'accélération obtenue du véhicule (1) est réalisée par la procédure de commande comprenant en outre :
- par le dispositif processeur (502), l'obtention (305-1) d'une accélération actuelle du véhicule (i) ;
- par le dispositif processeur (502), lorsque l'accélération actuelle dépasse l'accélération indiquée par la condition d'accélération, l'application (305-2) d'une charge de freinage accrue sur au moins l'un parmi l'ensemble de freins auxiliaires (10), mais
- par le dispositif processeur (502), lorsque l'accélération actuelle est inférieure à l'accélération indiquée par la condition d'accélération, l'application (305-2) d'une charge de freinage réduite sur au moins l'un parmi l'ensemble de freins auxiliaires (10).

4. Procédé selon l'une quelconque des revendications 2 à 3, comprenant en outre :
- par le dispositif processeur (502), la réception (304) d'un signal indiquant une accélération actuelle dudit véhicule (1), et
- dans lequel la commande (305) dudit ensemble de freins auxiliaires (10) est réalisée à l'aide d'une commande en boucle fermée qui utilise le signal indiquant l'accélération actuelle et la condition d'accélération obtenue.

5. Procédé selon l'une quelconque des revendications 2 à 4, dans lequel le fait de déterminer (305-13) s'il faut mettre en prise la ligne d'arbres de transmission du véhicule (1) ou s'il faut désaccoupler au moins une partie de la ligne d'arbres de transmission du véhicule (1) comprend :
- le fait de déterminer de mettre en prise la ligne d'arbres de transmission du véhicule (1) lorsque la ligne d'arbres de transmission du véhicule (1) est désaccouplée et lorsqu'une différence entre la première accélération de véhicule (1) et la seconde accélération de véhicule (1) est supérieure à un premier seuil, et
- le fait de déterminer de désaccoupler au moins une partie de la ligne d'arbres de transmission du véhicule (1) lorsque la ligne d'arbres de transmission du véhicule (1) est en prise et lorsque la différence entre la première accélération de véhicule (1) et la seconde accélération de véhicule (1) est supérieure à un second seuil.

6. Procédé selon l'une quelconque des revendications 2 à 5, dans lequel le fait de déterminer (305) si le véhicule (1) peut ou non être commandé conformément à la condition d'accélération obtenue à l'aide dudit ensemble de freins auxiliaires (10) comprend le fait de détecter qu'il existe une absence d'une charge demandée du moteur du véhicule (1).

7. Procédé selon la revendication 6, dans lequel le fait de détecter qu'il existe une absence d'une charge demandée du moteur du véhicule (1) comprend : par le dispositif processeur (502), le fait de détecter qu'une pédale d'accélérateur du véhicule (1) est dans un état relâché.

8. Procédé selon l'une quelconque des revendications 2 à 7, comprenant en outre :
par le dispositif processeur (502), lorsque l'ensemble de freins auxiliaires (10) est commandé conformément à la condition d'accélération indiquant l'accélération négative prédéfinie du véhicule (1), et en réponse à l'obtention (306) d'une indication pour ajuster la condition d'accélération négative du véhicule (1), l'ajustement (307) de l'accélération négative prédéfinie du véhicule (1) à l'aide d'un modificateur d'accélération négative prédéfinie.

9. Véhicule (1) comprenant un ensemble de freins auxiliaires (10) et un système informatique (500) selon la revendication 1.

10. Véhicule (1) selon la revendication 9, dans lequel le véhicule (1) comprend une interface utilisateur (20) permettant de définir une condition d'accélération, l'interface utilisateur (20) est adaptée à prendre au moins trois positions distinctes, et dans lequel au moins trois positions distinctes sont mises en correspondance avec une condition d'accélération respective.

11. Produit-programme informatique comprenant un code de programme permettre de réaliser, lorsqu'il est exécuté par le dispositif processeur (502), le procédé selon l'une quelconque des revendications 2 à 8.

12. Support de stockage non transitoire lisible par ordinateur comprenant des instructions, qui lorsqu'elles sont exécutées par le dispositif processeur (502), amènent le dispositif processeur (502) à réaliser le procédé selon l'une quelconque des revendications 2 à 8.
